# EUROPÄISCHE PATENTSCHRIFT

(11) **EP 3 452 885 B1**
(45) Veröffentlichungstag und Bekanntmachung des Hinweises auf die Patenterteilung: **08.07.2020**
(21) Anmeldenummer: 17721379.0
(22) Anmeldetag: 04.05.2017
(51) Int. Cl.: G06F 3/01, H01F 38/14, A63B 22/02, A63B 69/00, A63B 21/008, A63B 24/00, A63B 71/06

(54) **SYSTEM ZUR REALISIERUNG EINER UMGEBUNG VIRTUELLER REALITÄT**
SYSTEM FOR CREATING A VIRTUAL REALITY ENVIRONMENT
SYSTÈME POUR RÉALISER UN ENVIRONNEMENT DE RÉALITÉ VIRTUELLE

(30) Priorität: 06.05.2016 DE 102016207830
(43) Veröffentlichungstag der Anmeldung: 13.03.2019
(73) Patentinhaber: Robert Bosch GmbH, 70442 Stuttgart (DE)
(72) Erfinder: RITTER, Claus, 76337 Waldbronn (DE)
(86) Internationale Anmeldenummer: PCT/EP2017/060646
(87) Internationale Veröffentlichungsnummer: WO 2017/191251

(56) Entgegenhaltungen:
- US-A1- 2004 214 690
- US-A1- 2010 147 430
- US-A1- 2012 249 412

## Beschreibung

Die Erfindung betrifft ein System zur Realisierung einer Umgebung virtueller Realität und ein Verfahren zum Ansteuern eines solchen Systems.

### Stand der Technik

Es sind Systeme und Verfahren bekannt, die mit Hilfe von Projektoren und/oder Brillen ("VR-Brillen") eine optische Umgebung virtueller Realität erzeugen. In Fahrzeug- und Flugsimulatoren kann der Eindruck der virtuellen Realität durch simulierte Bewegungen verstärkt werden.

Im Dokument US 2004/0214690 A1 ist ein ein Virtual-Reality-System gezeigt, welches die Position und Bewegung eines Benutzers im realen Raum in den virtuellen Raum überträgt. Das System der virtuellen Realität umfasst eine Bewegungsschnittstelle, die Signale ausgibt, die die Position eines Benutzers im realen Raum angeben.

Es ist Aufgabe der Erfindung, ein platzsparendes System bereit zu stellen, das es ermöglicht, auch für natürliche Bewegungen eines Menschen, insbesondere "Gehen" oder "Laufen", eine virtuelle Umgebung bereit zu stellen, die nicht auf eine optische Darstellung der virtuellen Umgebung beschränkt ist, sondern es Personen ermöglicht, sich uneingeschränkt in der virtuellen Realität zu bewegen.

### Offenbarung der Erfindung

Gemäß einem Ausführungsbeispiel der Erfindung umfasst ein System zur Realisierung einer Umgebung virtueller Realität: eine stationäre Basis; eine gegenüber der stationären Basis beweglich angeordnete Plattform, die von einer in Bezug auf die Plattform beweglichen Folie umschlossen ist; wenigstens einen Schwebeaktuator, der es ermöglicht, die Plattform gegenüber der Basis in einen berührungslosen Schwebezustand zu versetzen und in diesem Zustand zu halten; und wenigstens einen Bewegungsaktuator, der es ermöglicht, die Folie gegenüber der Plattform zu bewegen.

Mit Hilfe des wenigstens einen Schwebeaktuators kann die Plattform in einen frei schwebenden Zustand gebracht werden. Insbesondere kann die Plattform in einen Zustand gebracht werden, in die ihre Oberfläche auf der gleichen Höhe wie eine Oberfläche der Basis angeordnet ist.

Das Schweben der Plattform ermöglicht es der Folie, sich entlang des Umfangs der Plattform frei zu bewegen. Durch den wenigstens einen Bewegungsaktuator kann die Folie so bewegt werden, dass sie Bewegungen einer Person, die sich auf der Plattform befindet, ausgleicht. Der wenigstens eine Bewegungsaktuator kann insbesondere so angesteuert werden, dass sich die Person durch die Bewegung der Folie stets an der gleichen Stelle der Plattform befindet, auch wenn sie sich gegenüber der Folie bewegt, z.B. weil sie geht, läuft oder rennt.

Dazu umfasst das System wenigstens einen Bewegungssensor, der ausgebildet ist, die Bewegungen einer Person, die sich auf der Plattform befindet, zu erfassen und die Information an eine Steuerung weiterzugeben. Dies ermöglicht es der Steuerung, den wenigstens einen Bewegungsaktuator so anzusteuern, dass die Folie die Bewegung(en) der Person, die sich auf der Plattform befindet, ausgleicht.

Der wenigstens eine Bewegungssensor kann eine Kamera umfassen, welche die Bewegung(en) einer Person, die sich auf der Plattform befindet, optisch erfasst. Alternativ oder zusätzlich kann der wenigstens eine Bewegungssensor als ein in der Plattform ausgebildeter Drucksensor ausgebildet sein, der es ermöglicht, die Position der Person auf der Plattform anhand eines von der Person durch ihr Gewicht auf die Plattform ausgeübten Drucks zu erfassen.

In einer Ausführungsform ist der wenigstens eine Schwebeaktuator ein pneumatischer Aktuator, der es ermöglicht, die Plattform mit Hilfe von Druckluft in einen Schwebezustand zu versetzen. Ein pneumatischer Aktuator ist besonders kostengünstig zu realisieren.

Der wenigstens eine Schwebeaktuator kann auch als elektromagnetischer Aktuator ausgebildet sein, der die Plattform mit Hilfe elektromagnetischer Kräfte in den gewünschten Schwebezustand versetzt. Ein elektromagnetischer Aktuator kann, insbesondere im Vergleich zu einem pneumatischen Aktuator, besonders geräuscharm betrieben werden.

In einer Ausführungsform ist der wenigstens eine Bewegungsaktuator ausgebildet, die Folie berührungslos, beispielsweise durch elektromagnetische Kräfte, zu bewegen. Auf diese Weise kann die Folie besonders effektiv, verschleiß- und geräuscharm bewegt werden.

In einer Ausführungsform ist der wenigstens eine Bewegungsaktuator ausgebildet, die Folie durch mechanisches Einwirken auf die Folie, insbesondere durch Reibung, zu bewegen. Der wenigstens eine Bewegungsaktuator kann beispielsweise eine Kugel oder Walze umfassen, die in mechanischem Kontakt mit der Folie steht, so dass die Folie durch Drehen der Kugel bzw. Walze bewegt werden kann. Auf diese Weise kann ein kostengünstiger und effektiver Bewegungsaktuator realisiert werden.

In einer Ausführungsform ist in der Plattform eine lokale Energiequelle, insbesondere eine Batterie, vorgesehen, die er ermöglicht, in der Plattform angeordnete Sensoren und Aktuatoren anzutreiben, ohne der Plattform im Betrieb von außen Energie zuführen zu müssen.

Die lokale Energiequelle kann durch eine elektrische Kabel- bzw. Steckverbindung aufgeladen werden, wenn das System nicht im Betrieb ist und sich die Plattform nicht im Schwebezustand befindet. So kann auf ein aufwendiges System zur berührungslosen Energieübertragung verzichtet werden.

In einer Ausführungsform umfasst das System ein berührungsloses, insbesondere ein induktives, Energieübertragungssystem, das es ermöglicht, elektrische Energie von der Basis an die Plattform zu übertragen. Auf diese Weise können die Plattform, insbesondere die in der Plattform angeordneten Sensoren und Aktuatoren, auch im laufenden Betrieb, d.h. wenn sich die Plattform in einem Schwebezustand befindet, mit Energie versorgt werden. Die Laufzeit des Systems ist in diesem Fall nicht durch die Speicherkapazität einer lokalen, in der Plattform angeordneten Energiequelle beschränkt.

Die Erfindung wird im Folgenden anhand eines in den beigefügten Figuren gezeigten Ausführungsbeispiels näher erläutert:

### Kurze Figurenbeschreibung

Figur 1 zeigt eine schematische Draufsicht auf ein System zur Realisierung einer Umgebung virtueller Realität gemäß einem Ausführungsbeispiel der Erfindung.
Figur 2 zeigt eine schematische Schnittansicht eines Systems zur Realisierung einer Umgebung virtueller Realität gemäß einem Ausführungsbeispiel der Erfindung.
Figur 3 ist eine beispielhafte Anordnung von Bewegungsaktuatoren in einer Plattform 6 gemäß einem Ausführungsbeispiel der Erfindung.
Figur 4 illustriert in einer schematischen Schnittansicht eine mögliche Energieversorgung der Plattform.
Figur 5 illustriert in einer schematischen Schnittansicht eine alternative mögliche Energieversorgung der Plattform.

### Ausführliche Beschreibung der Figuren

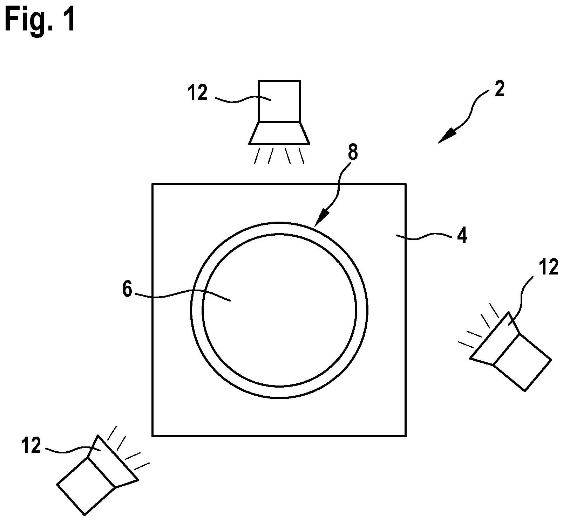

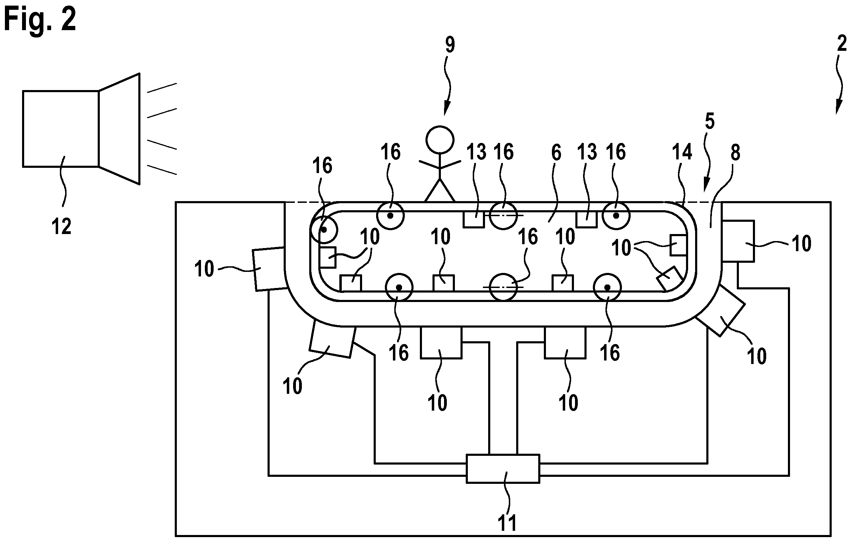

Figur 1 zeigt eine schematische Draufsicht und Figur 2 zeigt eine schematische Schnittansicht eines Systems 2 zur Realisierung einer Umgebung virtueller Realität gemäß einem Ausführungsbeispiel der Erfindung.

Das System 2 umfasst insbesondere eine stationäre Basis 4 und eine Plattform 6, die beweglich in einer auf der Oberseite der Basis 4 ausgebildeten Vertiefung 5 angeordnet ist.

Insbesondere ist zwischen der beweglichen Plattform 6 und der Basis 4 ein Spalt 8 ausgebildet, der in die Figuren 1 und 2 nicht maßstabsgerecht sondern vergrößert dargestellt ist.

In der Basis 4 und/oder in der Plattform 6 sind Schwebeaktuatoren 10 ausgebildet, die es ermöglichen, die Plattform 6 in einen in der Figur 2 gezeigten Schwebezustand zu versetzen, in dem die Plattform 6 keinen Kontakt mit der Basis 4 hat, sondern frei in der auf der Oberseite der Basis 4 ausgebildeten Vertiefung 5 schwebt. Um diesen Schwebezustand zu erreichen, werden die Schwebeaktuatoren 10 von einer Steuervorrichtung 11 geeignet angesteuert.

Das System 2 umfasst wenigstens einen Bewegungssensor 12. In dem in den Figuren 1 und 2 gezeigten Ausführungsbeispiel sind drei Bewegungssensoren vorgesehen, die als #optische Kameras#12 ausgebildet sind.

Die Bewegungssensoren/Kameras 12 ermöglichen es, die Position einer Person 9 die sich auf der Plattform 6 befindet, zu erfassen und die Schwebeaktuatoren 10 durch die Steuerung 11 so anzusteuern, dass sich die Plattform 6 unabhängig von der Position und dem Gewicht einer Person 9, die sich auf der Plattform 6 befindet, im gewünschten Schwebezustand befindet.

Alternativ oder zusätzlich können auf der von der Basis 4 abgewandten Oberseite der Plattform 6 Drucksensoren 13 vorgesehen sein, die es ebenfalls ermöglichen, die Position einer Person 9, die sich auf der Plattform 6 befindet, anhand des von ihrem Gewicht ausgeübten Druck zu bestimmen.

Die Plattform 6 ist vollständig von einer sich um Umfang der Plattform 6 erstreckenden Folie 14 derart umschlossen, dass die Folie 14 gegenüber der Plattform 6 in allen Richtungen entlang des Umfangs der Plattform 6 beweglich ist. Das heißt, die Folie 14 kann in einer beliebigen Richtung entlang des äußeren Umfangs der Plattform 6 bewegt werden. Die Folie 14 ist insbesondere aus einem besonders reißfesten Material hergestellt.

Um die Folie 14 in der gewünschten Richtung um die Plattform 6 bewegen zu können, sind in/an der Plattform 6 mehrere Bewegungsaktuatoren 16 vorgesehen.

Die Bewegungsaktuatoren 16 können insbesondere drehbar gelagerte Walzen oder Kugeln umfassen, die in mechanischem (Reibungs-)Kontakt mit der Folie 14 stehen und durch geeignete Motoren (die in den Figuren nicht gezeigt sind), angetrieben werden, um die Folie 14 in der gewünschten Richtung um den äußeren Umfang der Plattform 6 zu bewegen.

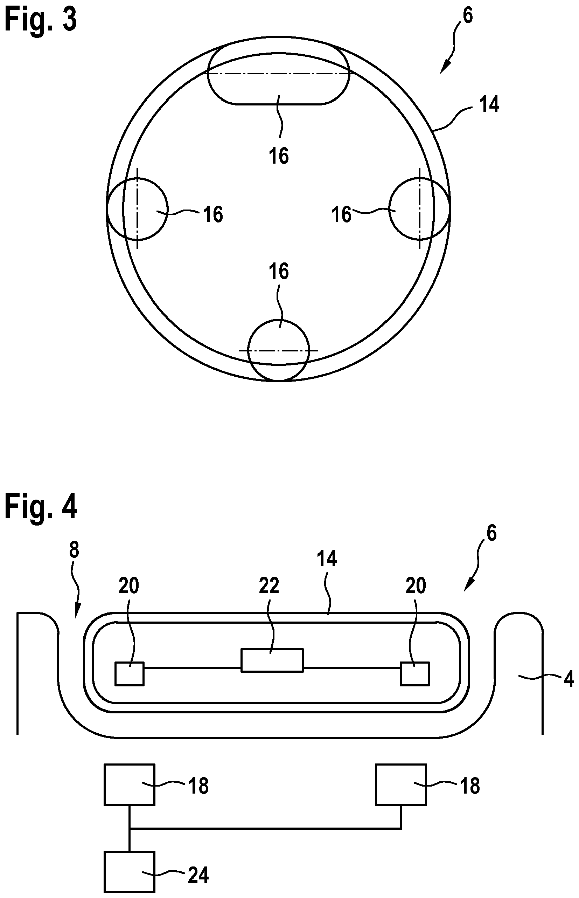

Figur 3 ist eine schematische Ansicht einer Plattform 6, in der die Positionen und Rotationsachsen einer beispielhaften Anordnung von Bewegungsaktuatoren 16 gezeigt sind.

In einem alternativen, in den Figuren nicht gezeigten Ausführungsbeispiel, sind magnetische/metallische Elemente in die Folie 14 eingearbeitet. Die magnetischen/metallischen Elemente ermöglichen es, die Folie 14 nach dem Prinzip des Linearmotors durch an/in der Plattform 6 und/oder an/in der Basis 4 angeordnete elektromagnetische Bewegungsaktuatoren berührungslos in der gewünschten Richtung zu bewegen. Elektromagnetische Bewegungsaktuatoren ermöglichen ein besonders effektives und verschleißarmes Bewegen der Folie 14.

Figur 4 illustriert in einer schematischen Schnittansicht, wie elektrische Energie an die Plattform 6 übertragen werden kann, um die in der Plattform 6 angeordnete Sensoren 13 und Aktuatoren 10, 16 mit elektrischer Energie zu versorgen.

Um die Figur 4 übersichtlicher zu gestalten, sind die Sensoren 13 und Aktuatoren 10, 16 in der Figur 4 nicht gezeigt.

In dem in der Figur 4 gezeigten Ausführungsbeispiel weist die Plattform 6 eine lokale Energiespeichervorrichtung 22, beispielsweise eine elektrische Batterie, auf. Die lokale Energiespeichervorrichtung 22 ist elektrisch mit induktiven Empfangselementen 20, beispielsweise elektrischen Spulen, verbunden.

In der Basis 4 sind korrespondierende induktive Sendeelemente 18, beispielsweise Spulen, ausgebildet, die von einer stationären Stromversorgung 24 mit elektrischem Wechselstrom versorgt werden.

Die induktiven Sendeelemente 18 erzeugen im Betrieb ein elektromagnetisches Wechselfeld, das in den induktiven Empfangselementen 20 einem Wechselstrom induziert. Der induzierte Wechselstrom wird gleichgerichtet und in der Energiespeichervorrichtung 22 gespeichert, so dass er für die Energieversorgung der Sensoren 13 und/oder der Aktuatoren 10, 16 verwendet werden kann.

In einem alternativen Ausführungsbeispiel wird auf die Energiespeichervorrichtung 22 verzichtet und die von den induktiven Empfangselementen 20 erzeugte elektrische Energie wird unmittelbar an die Sensoren 13 und Aktuatoren 10 weitergeleitet. In diesem Fall muss die Energieübertragung an die Plattform 6 im Betrieb ununterbrochen aufrechterhalten werden.

Durch die in der Figur 4 gezeigte Zwischenspeicherung der elektrischen Energie in einer Energiespeichervorrichtung 22 kann die Betriebssicherheit des Systems 2 erhöht werden, da kurze Unterbrechungen der Energieversorgung durch von der Energiespeichervorrichtung 22 zur Verfügung gestellte Energie ausgeglichen werden können.

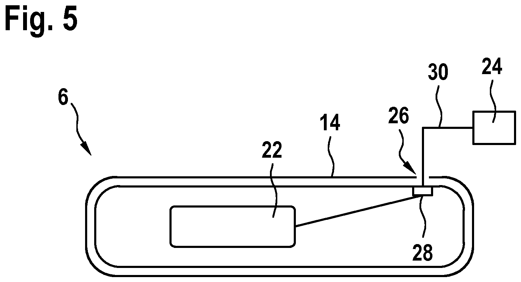

Figur 5 zeigt ein alternatives Ausführungsbeispiel einer Plattform 6, wobei in der die Plattform 6 umgebender Folie 14 wenigstens eine Öffnung 26 ausgebildet ist.

An/in der Plattform 6 ist wenigstens ein elektrischer Kontakt 28 vorgesehen, der elektrisch mit der (elektrischen) Energiespeichervorrichtung 22 verbunden ist.

Um elektrische Energie von einer externen Energiequelle 24 an die Energiespeichervorrichtung 22 zu übertragen, wird die wenigstens eine in der Folie 14 ausgebildete Öffnung 26 über dem elektrischen Kontakt 28 positioniert. Der elektrische Kontakt 28 kann dann mit einer geeigneten elektrischen Leitung 30 kontaktiert werden, um elektrischen Energie von der externen Energiequelle 24 an die in der Plattform 6 angeordnete Energiespeichervorrichtung 22 zu übertragen.

In dem in der Figur 5 gezeigten Ausführungsbeispiel kann auf eine induktiven Energieversorgung, wie sie in der Figur 4 gezeigt ist, verzichtet werde. Energie kann in diesem Ausführungsbeispiel allerdings nur im Ruhezustand, wenn sich die Folie 14 nicht bewegt, übertragen werden. Die ununterbrochene Betriebszeit des Systems 2 ist daher durch die Speicherkapazität der Energiespeichervorrichtung 22 begrenzt.

Im Folgenden wird beispielhaft die Funktion und Nutzung eines erfindungsgemäßen Systems 2 gemäß Ausführungsbeispielen der Erfindung beschrieben.

Nach dem Starten des Systems 2 beginnt die Plattform 6 zu schweben. Dabei wird die Oberseite der Plattform 6 vorzugsweise auf der gleichen Höhe wie die Oberseite der Basis 4 gehalten, so dass sich ein bündiger Abschluss zwischen Plattform 6 und der Basis 4 ergibt.

Eine Person ("Nutzer") 9 betritt die Plattform 6. Der Schwebezustand der Plattform 6 wird durch einen Regelungsalgorithmus in Abhängigkeit des Gewichts der Plattform 6 und einer Person 9, welche die Plattform 6 betritt, aufrechterhalten.

Die Plattform 6 ist aus Sicht der Person 9 unbeweglich, da ihr Gewicht jederzeit durch eine geeignet Ansteuerung der Schwebeaktoren10 kompensiert wird. D.h, lokale Gewichtsunterschiede auf der Plattform 6, die sich aus Veränderungen der Position der Person 9 auf der Plattform 6 ergeben, werden durch eine geeignete Ansteuerung der Schwebeaktoren 10 ausgeglichen. Je mehr Schwebeaktoren 10 vorhanden sind, desto besser und genauer können solche lokalen Gewichtsunterschiede kompensiert werden. Die Anordnung der Schwebeaktoren 10 erstreckt sich insbesondere über die gesamte Fläche welche durch die Plattform 6 aus der Basis "ausgeschnitten" ist.

Die Person 9 kann daher an einer beliebigen Position auf der schwebenden Plattform 6 stehen, ohne dass diese kippt.

Nachdem sich die Person 9 in die Mitte der Plattform 6 begeben hat, wird die "Bewegungskompensation" aktiviert.

Durch die Bewegungssensoren 12, 13 wird die Bewegung der Person 9 auf der Plattform 6 beobachtet. Mit Hilfe der Bewegungsaktuatoren 16a-16c, die in der Plattform 6 ausgebildet sind, wird die Folie 14 im Folgenden so bewegt, dass sich die Person 9 bei seiner Bewegung, z.B. nach jedem Schritt, wieder in der Mitte der Plattform 6 befindet. Durch das vollständige Umhüllen der Plattform 6 mit der Folie 14 ist eine vollständige Kompensation der Bewegungen der Person 9 in jede Richtung möglich. D.h., die Person 9 kann "unendlich" in eine Richtung laufen, ohne dabei jemals den Rand der Plattform 6 zu erreichen.

In Kombination mit einer geeigneten optischen Darstellung z.B. auf um die Plattform 6 angeordneten Projektionsschirmen oder einer VR-Brille, welche die Person 9 aufsetzt, kann damit auf geringen Raum ein überwältigendes Erlebnis virtueller Realität geschaffen werden.

## Patentansprüche

1. System (2) zur Realisierung einer Umgebung virtueller Realität mit
einer stationären Basis (4);
einer gegenüber der stationären Basis (4) beweglich angeordneten Plattform (6), die von einer gegenüber der Plattform (6) beweglichen Folie (14) umschlossen ist; und
wenigstens einen Bewegungsaktuator (16a, 16b, 16c), der ausgebildet ist, die Folie (14) gegenüber der Plattform (6) zu bewegen,
**dadurch gekennzeichnet, dass** wenigstens einem Schwebeaktuator (10) es ermöglicht die Plattform (6) in Bezug auf die Basis (4) in einen berührungslosen Schwebezustand zur versetzen und in diesem Zustand zu halten, wobei das System (2) wenigstens einen Bewegungssensor (12, 13) aufweist, der ausgebildet ist, die Bewegung einer Person (9), die sich auf der Plattform (6) befindet, zu erfassen.

2. System (2) nach Anspruch 1, wobei der wenigstens eine Bewegungssensor (12, 13) eine Kamera (12) und/oder einen Drucksensor (13) umfasst.

3. System (2) nach einem der Ansprüche 1 bis 2, wobei der wenigstens eine Schwebeaktuator (10) ein pneumatischer und/oder ein elektromagnetischer Aktuator ist.

4. System (2) nach einem der Ansprüche 1 bis 3, wobei der Bewegungsaktuator (16a, 16b, 16c) ausgebildet ist, die Folie (14) berührungslos, insbesondere elektromagnetisch, zu bewegen.

5. System (2) nach einem der Ansprüche 1 bis 3, wobei der Bewegungsaktuator (16a, 16b, 16c) ausgebildet ist, die Folie (14) durch mechanisches Einwirken auf die Folie (14), insbesondere durch Reibung, zu bewegen.

6. System (2) nach Anspruch 5, wobei der Bewegungsaktuator (16a, 16b, 16c) eine Kugel oder Walze umfasst, die im Kontakt mit der Folie (14) steht.

7. System (2) nach einem der vorangehenden Ansprüche, wobei die Plattform (6) eine lokale Energiespeichervorrichtung (22), insbesondere eine Batterie, umfasst.

8. System (2) nach einem der vorangehenden Ansprüche mit einem berührungslosen, insbesondere induktiven, Energieübertragungssystem, das es ermöglicht, elektrische Energie von der Basis (4) an die Plattform (6) zu übertragen.

9. Verfahren des Ansteuerns eines Systems nach einem der Ansprüche 1 bis 8, wobei das Verfahren umfasst:
den wenigstens einen Schwebeaktuator (10) so anzusteuern, dass sich die Plattform (6) in Bezug auf die Basis (4) in einem berührungslosen Schwebezustand befindet;
die Bewegung einer Person (9), die sich auf der Plattform (6) befindet, zu erfassen;
den wenigstens einen Bewegungsaktuator (16a, 16b, 16c) so anzusteuern, dass er die Bewegung der Person (9) kompensiert, so dass die Position der Person (9) in Bezug auf die Plattform (6) im Wesentlichen konstant bleibt.

## Claims

1. System (2) for creating a virtual reality environment, comprising
a stationary base (4);
a platform (6) which is arranged in a movable manner in relation to the stationary base (4) and which is surrounded by a film (14) which is movable in relation to the platform (6); and
at least one movement actuator (16a, 16b, 16c) which is designed to move the film (14) in relation to the platform (6),
**characterized in that** at least one floating actuator (10) allows the platform (6) to be offset with respect to the base (4) in a contactless floating state and to be kept in this state, wherein the system (2) has at least one movement sensor (12, 13) which is designed to detect the movement of a person (9) who is located on the platform (6) .

2. System (2) according to Claim 1, wherein the at least one movement sensor (12, 13) comprises a camera (12) and/or a pressure sensor (13).

3. System (2) according to either of Claims 1 and 2, wherein the at least one floating actuator (10) is a pneumatic and/or an electromagnetic actuator.

4. System (2) according to one of Claims 1 to 3, wherein the movement actuator (16a, 16b, 16c) is designed to move the film (14) in a contactless manner, in particular electromagnetically.

5. System (2) according to one of Claims 1 to 3, wherein the movement actuator (16a, 16b, 16c) is designed to move the film (14) by mechanically acting on the film (14), in particular by friction.

6. System (2) according to Claim 5, wherein the movement actuator (16a, 16b, 16c) comprises a ball or roller which is in contact with the film (14).

7. System (2) according to one of the preceding claims, wherein the platform (6) comprises a local energy storage apparatus (22), in particular a battery.

8. System (2) according to one of the preceding claims comprising a contactless, in particular inductive, energy transmission system which allows electrical energy to be transmitted from the base (4) to the platform (6).

9. Method for actuating a system according to one of Claims 1 to 8, wherein the method comprises:
actuating the at least one floating actuator (10) such that the platform (6) is in a contactless floating state with respect to the base (4);
detecting the movement of a person (9) who is located on the platform (6);
actuating the at least one movement actuator (16a, 16b, 16c) such that it compensates for the movement of the person (9), so that the position of the person (9) remains substantially constant with respect to the platform (6).

## Revendications

1. Système (2) destiné à réaliser un environnement de réalité virtuelle, comprenant
une base stationnaire (4) ;
une plate-forme (6) disposée de manière mobile par rapport à la base stationnaire (4) et entourée d'un film (14) mobile par rapport à la plate-forme (6) ; et
au moins un actionneur de mouvement (16a, 16b, 16c) réalisé pour déplacer le film (14) par rapport à la plate-forme (6),
**caractérisé en ce qu'**au moins un actionneur flottant (10) permet de mettre la plate-forme (6) dans un état flottant sans contact par rapport à la base (4) et de la maintenir dans cet état, le système (2) présentant au moins un capteur de mouvement (12, 13) qui est réalisé pour détecter le mouvement d'une personne (9) qui se trouve sur la plate-forme (6).

2. Système (2) selon la revendication 1, dans lequel ledit au moins un capteur de mouvement (12, 13) comprend une caméra (12) et/ou un capteur de pression (13) .

3. Système (2) selon l'une quelconque des revendications 1 et 2, dans lequel ledit au moins un actionneur flottant (10) est un actionneur pneumatique et/ou électromagnétique.

4. Système (2) selon l'une quelconque des revendications 1 à 3, dans lequel l'actionneur de mouvement (16a, 16b, 16c) est réalisé pour déplacer le film (14) sans contact, en particulier de manière électromagnétique.

5. Système (2) selon l'une quelconque des revendications 1 à 3, dans lequel l'actionneur de mouvement (16a, 16b, 16c) est réalisé pour déplacer le film (14) par une action mécanique sur le film (14), en particulier par frottement.

6. Système (2) selon la revendication 5, dans lequel l'actionneur de mouvement (16a, 16b, 16c) comprend une bille ou un rouleau en contact avec le film (14).

7. Système (2) selon l'une quelconque des revendications précédentes, dans lequel la plate-forme (6) comprend un dispositif accumulateur d'énergie local (22), en particulier une batterie.

8. Système (2) selon l'une quelconque des revendications précédentes, comprenant un système de transmission d'énergie sans contact, en particulier inductif, permettant de transmettre de l'énergie électrique de la base (4) à la plate-forme (6).

9. Procédé permettant de piloter un système selon l'une quelconque des revendications 1 à 8, le procédé comprenant les étapes consistant à :
piloter ledit au moins un actionneur flottant (10) de telle sorte que la plate-forme (6) se trouve dans un état flottant sans contact par rapport à la base (4) ;
détecter le mouvement d'une personne (9) se trouvant sur la plate-forme (6) ;
piloter ledit au moins un actionneur de mouvement (16a, 16b, 16c) de telle sorte qu'il compense le mouvement de la personne (9) de sorte que la position de la personne (9) reste substantiellement constante par rapport à la plate-forme (6).
